# EUROPEAN PATENT SPECIFICATION

(11) **EP 0 446 013 B1**
(45) Date of publication and mention of the grant of the patent: **03.07.1996**
(21) Application number: 91301811.5
(22) Date of filing: 05.03.1991
(51) Int. Cl.: C08F 10/02, C08F 4/70

(54) **Polyethylene and process of production thereof**
Polyäthylen und Verfahren zur Herstellung
Polyéthylène et son procédé de préparation

(30) Priority: 06.03.1990 JP 52626/90; 09.08.1990 JP 209302/90
(43) Date of publication of application: 11.09.1991
(73) Proprietor: Tosoh Corporation, Shinnanyo-shi, Yamaguchi-ken, 746 (JP)
(72) Inventor: Yano, Akihiro, Yokkaichi-shi, Mie-ken (JP); Yamada, Satoru, Mie-gun, Mie-ken (JP); Yamada, Kunitaka, Yokkaichi-shi, Mie-ken (JP)
(74) Representative: Kearney, Kevin David Nicholas

(56) References cited:
- EP-A- 0 194 456
- EP-A- 0 381 495
- DE-A- 3 445 090
- ANGEWANDTE CHEMIE, vol. 20, no. 1, January 1981, pages 116-117, Verlag Chemie GmbH, Weinheim, DE; W. KEIM et al.: "Novel nickel- and palladium-complexes with aminobis(imino)phosphorane ligands for the polymerization of ethylene"

## Description

### Background of the Invention:

### Field of the Invention:

The present invention relates to novel polyethylene which has a branching structure. The present invention also relates to a process for the production of such a polyethylene.

### Related Background Art:

Generally, polymerization of ethylene with a free radical initiator at exceedingly high temperature and pressure gives polyethylene which has long chain branches having length comparable to the main polymer chain thereof. On the contrary, polymerization of ethylene with a Ziegler-Natta catalyst gives polyethylene which has almost no branches.

In order to produce branched polyethylene by use of a Ziegler-Natta catalyst, ethylene is generally copolymerized with α-olefin. The copolymerization, however, does not give long chain branches such as those formed by radical polymerization.

In an attempt to obtain low-pressure polyethylene having such long chain branching, ethylene may be oligomerized by use of a nickel catalyst such as disclosed in Japanese Patent Application Laid-Open No. 63-12607, and the resulting oligomer may be copolymerized with ethylene in the presence of a chromium catalyst. This method does not give such a long chain branching as produced by free radical polymerization.

### Summary of the Invention:

An object of the present invention is to provide a polyethylene having a branching structure.

Another object of the present invention is to provide a process for producing the polyethylene having a branching structure.

According to an aspect of the present invention, there is provided polyethylene having from 1 to 60 methyl branches and from 1 to 60 hexyl or higher branches per 1000 carbon atoms, a g-value of from 0.5 to 0.9, wherein g = [η]/[η]_{ℓ}, where [η] is the limiting viscosity of a branched polyethylene, and [η]_{ℓ} is the limiting viscosity of a linear polyethylene having the same melt index, and a limiting viscosity [η] of from 0.005 to 20.0 dl/g as measured at 140°C in o-dichlorobenzene, and not more than 0.2 terminal double bonds per 1000 carbon atoms as measured by infrared absorption spectrum.

According to another aspect of the present invention, there is provided a process for producing polyethylene, comprising polymerizing ethylene in the presence of a catalyst composed of a coordination nickel compound of bivalent nickel, and an amino-bis(imino)-phosphorane represented by the general formula (I) below: 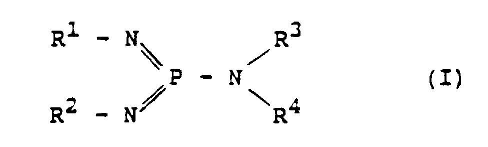 where R¹, R², R³ and R⁴ may be the same or different, and each represent an n-alkyl, isoalkyl, aryl or trialkysilyl group, characterised in that the co-ordination nickel compound is a nickel compound having β-diketone as ligands, represented by the general formula (II) below: 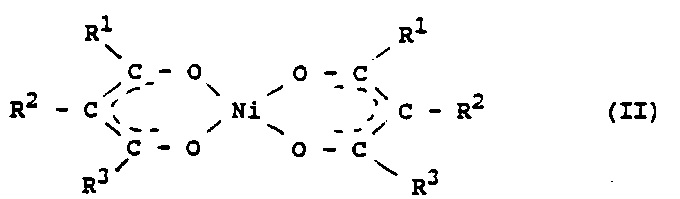 wherein R¹, R² and R³ are the same or different and represent a hydrogen atom,an n-alkyl group (having 1 to 4 carbon atoms), an isoalkyl group (having 3 to 5 carbon atoms), a tert-alkyl group (having 4 to 6 carbon atoms), n-fluoroalkyl group (having 1 to 4 carbon atoms) or a phenyl group, or is nickel stearate or is nickel acetate, and in that the catalyst also comprises an organoaluminium compound.

The polyethylene of the present invention has from 1 to 60 methyl branches and from 1 to 60 hexyl or higher branches per 1000 carbon atoms as short branches in its structure. The branches are confirmed to exist by ¹³C-NMR. The short branches can be assigned on the basis of *J.C. Randall, J. Polym. Sci., Polym. Phys. Ed.,* **11**, 275 (1973), for example.

In the structure of the polyethylene, the existence of long chain branches may be presumed if the polyethylene has a g-value, as defined, of less than 1. The branched polyethylene of the present invention has a g-value of from 0.5 to 0.9, which suggests the existence of long branches having comparable length to the main polymer chain.

EP-A-0381495, which is a prior art in the meaning of Art. 54(3,4) EPC, discloses polymerisation of ethylene in the presence of a catalyst consisting of an aminobis (imino) -phosphorane and bis(1,5-cyclooctadiene) nickel and Alpha-olefin but does not use an organoaluminium compound. The resulting product has terminal double bonds.

*Angewandte Chemie,* **vol 20**, no. 1 pages 116-117 discloses polymerisation of ethylene in the presence of an amino-bis(imino)-phosphorane and bis(n-allyl) nickel but does not use an organoaluminium compound. The resulting product again has terminal double bonds.

The present invention utilises a different nickel compound and an organoaluminium compound.

The polyethylene of the present invention has neither ethyl branches nor butyl branches which exist in polyethylene produced by radical polymerisation at high temperature and high pressure. Furthermore, this polyethylene has almost no terminal double bonds, which is confirmed by infrared absorption spectrum, the number of double bonds being not more than 0.2 per 1000 carbon atoms. Such polyethylene having no double bonds is characteristically stable during processing.

The polyethylene of the invention can be produced by homopolymerizing ethylene desirably at a temperature of from -78°C to 200°C and desirably under an ethylene pressure of from 1 to 100 kg/cm² in the presence of a catalyst composed of a coordination nickel compound of bivalent nickel, an organoaluminium compound, and an amino-bis(imino)-phosphorane represented by the general formula (I) below: 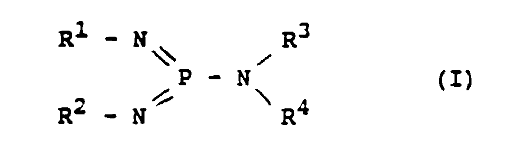 where R¹, R², R³ and R⁴ may be the same or different mutually and are respectively n-alkyl, isoalkyl, aryl or trialkysilyl.

The organoaluminium compounds are preferably those represented by the general formula, AlRₛX₃₋ₛ wherein s is an integer of 2 or 3; R is alkyl of 1 to 12 carbons; and x is halogen or alkoxy. Specifically the organic aluminium compound may be trimethylaluminium, triethylaluminium, triisopropyl aluminium, tri-n-propylaluminium, triisobutylaluminium, tri-n-butylaluminium, tri-n-hexylaluminium, tri-n-octylaluminium, tri-n-decylaluminium, tri-n-dodecylaluminium, dimethylaluminium chloride, diethylaluminium chloride, diisopropylaluminium chloride, di-n-propylaluminium chloride, diisobutylaluminium chloride, di-n-butylaluminium chloride, di-n-hexylaluminium chloride, di-n-octylaluminium chloride, di-n-decylaluminium chloride, di-n-dodecylaluminium chloride, dimethylaluminium ethoxide, diethylaluminium ethoxide, di-n-propylaluminium ethoxide, di-n-butylaluminium ethoxide, di-n-hexylaluminium ethoxide, di-n-octylaluminium ethoxide, di-n-decylaluminium ethoxide, or di-n-dodecylaluminium ethoxide.

The amino-bis-(imino)phosphorane represented by the general formula (I) includes specifically bis(trimethylsilyl)amino-bis(trimethylsilylimino)phosphorane. Such a compound may be prepared, for example, according to the method of O.J. Scherer and N. Kush: *Chem. Ber.* **107**, 2123 (1974).

In the polymerization of ethylene by use of the three-component catalyst, the ratio (molar ratio) of the nickel compound to the amino-bis(imino)phosphorane is preferably in the range of from 1:1 to 1:100. The ratio (molar ratio) of the nickel compound to the aluminium compound is preferably in the range of from 1:1 to 1:1000. The respective components may be introduced either in a solid form or in a solution in a solvent into a polymerization vessel. In adding the catalyst components, preferably the nickel compound and the amino-bis-(imino)phosphorane are first brought into contact with each other. Ethylene may be polymerized either in a liquid phase or in a gaseous phase. The polymerization in a liquid phase is conducted preferably by use of an inert solvent. Any of the inert solvents which are generally used in the related technical field may be used, including aliphatic hydrocarbons , aromatic hydrocarbons, and halogenated hydrocarbons having from 4 to 20 carbons. Specific examples are hexane, heptane, pentane, octane, decane, cyclohexane, benzene, toluene, xylene, chlorobenzene, ethylene dichloride and kerosene.

The polyethylene of the present invention can be produced by polymerization of ethylene at a low pressure. Polyethylene having such a structure has not been produced by a low pressure process.

The invention may be put into practice in various ways and a number of specific embodiments will be described to illustrate the invention with reference to the accompanying examples and drawing, in which:

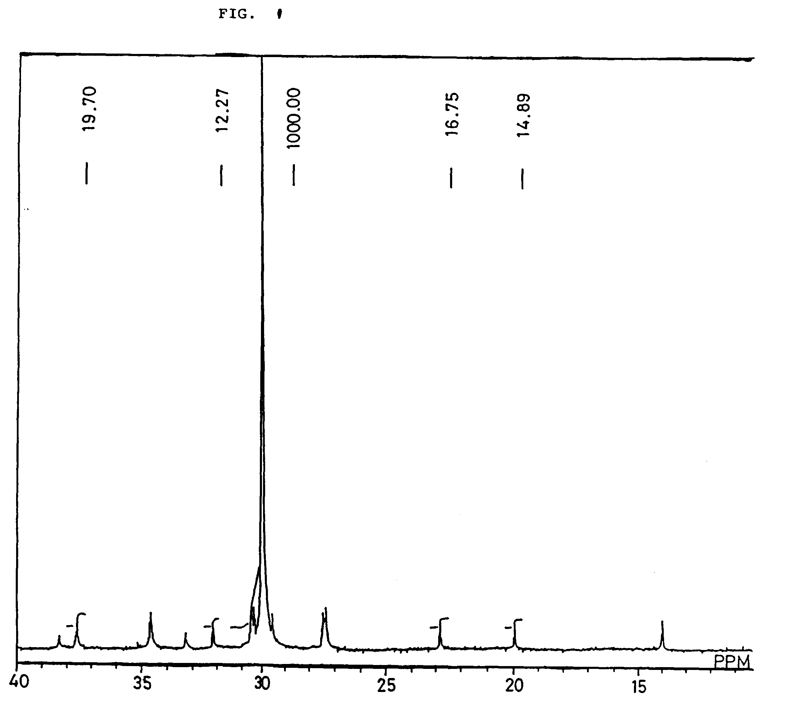

Figure 1 shows the ¹³C-NMR spectrum of the polyethylene obtained in Example 1.

### EXAMPLE 1

Into a 2-litre stainless steel reactor equipped with a magnetic stirrer, which had been purged thoroughly with nitrogen, 500 ml of toluene, 1.0 mmol of nickel acetylacetonate, and 5.0 mmol of bis(trimethylsilyl)amino-bis(trimethylsilylimino)phosphorane were added. Then 8.0 mmol of triisobutylaluminium was added thereto, and the internal temperature was controlled to be at 40°C. Subsequently, ethylene was introduced therein, and was polymerized for 3.0 hours by keeping the internal pressure at 25 kg/cm²G. After the completion of the reaction, the unreacted ethylene was removed, and the catalyst was decomposed by hydrochloric acid-methanol solution. The reaction mixture was poured into methanol to recover the resulting polymer, which was dried under reduced pressure for 8 hours, yielding 61 g of polymer.

The melting point was 77.0°C as measured by differential scanning calorimetry (DSC). The limiting viscosity was 1.14 dl/g at 140°C in o-dichlorobenzene.

Figure 1 shows the ¹³C-NMR spectrum of the resulting polymer. The peaks ascribable to a methyl branch are observed at 20.0 ppm, 27.5 ppm, 30.4 ppm, 33.2 ppm and 37.5 ppm; the peaks ascribable to the hexyl or higher branch are observed at 14.3 ppm, 23.1 ppm, 27.4 ppm, 30.7 ppm, 32.4 ppm, 34.6 ppm, and 38.3 ppm; and no other peak ascribable to branching was observed. From the spectrum, 13 methyl branches and 25 hexyl and higher branches are found to exist per 1000 carbon atoms. The g-value of the polymer was 0.86.

An infrared spectrum showed almost no peaks observable at 890 cm⁻¹, 910 cm⁻¹, and 965 cm⁻¹ which are ascribable to a terminal double bond. Thus the terminal double bond was 0.1 or less in number per 1000 carbon atoms.

### EXAMPLE 2

Into a 2-litre stainless steel reactor equipped with a magnetic stirrer, which had been purged thoroughly with nitrogen, 500 ml of toluene, 2.0 mmol of nickel acetylacetonate, and 10.0 mmol of bis(trimethylsilyl)amino-bis(trimethylsilylimino)phosphorane were added. Then 16.0 mmol of triisobutylaluminium was added thereto, and the internal temperature was controlled to be at 30°C. Subsequently, ethylene was introduced therein, and was polymerized for 3.0 hours by keeping the internal pressure at 25 kg/cm²G. After the completion of the reaction, the unreacted ethylene was removed, and the catalyst was decomposed by hydrochloric acid-methanol solution. The reaction mixture was poured into methanol to recover the resulting polymer, which was dried under reduced pressure for 8 hours, yielding 174 g of polymer.

The melting point was 84.6°C as measured by differential scanning calorimetry (DSC). The limiting viscosity was 1.83 dl/g at 140°C in o-dichlorobenzene. The number of methyl branches was 14 per 1000 carbon atoms, and that of hexyl and higher branches was 19 per 1000 carbon atoms according to ¹³C-NMR spectrum. The g-value was 0.71, and the number of terminal double bonds was not more than 0.2 in 1000 carbon atoms.

### EXAMPLE 3

Into a 2-litre stainless steel reactor equipped with a magnetic stirrer, which had been purged thoroughly with nitrogen, 500 ml of toluene, 2.0 mmol of nickel acetylacetonate, and 10.0 mmol of bis(trimethylsilyl)amino-bis(trimethylsilylimino)phosphorane were added. Then 16.0 mmol of diethylaluminium chloride was added thereto, and the internal temperature was controlled to be at 20°C. Subsequently, ethylene was introduced therein, and was polymerized for 3.0 hours by keeping the internal pressure at 25 kg/cm²G. After the completion of the reaction, the unreacted ethylene was removed, and the catalyst was decomposed by hydrochloric acid-methanol solution. The reaction mixture was poured into methanol to recover the resulting polymer, which was dried under reduced pressure for 8 hours, yielding 100 g of polymer.

The melting point was 87.2°C as measured by differential scanning calorimetry (DSC). The limiting viscosity was 1.54 dl/g at 140°C in o-dichlorobenzene. The number of methyl branches was 12 per 1000 carbon atoms, and that of hexyl and higher branches was 14 per 1000 carbon atoms according to ¹³C-NMR spectrum. The g-value was 0.72, and the number of terminal double bonds was not more than 0.2 in 1000 carbon atoms.

### EXAMPLE 4

Into a 2-litre stainless steel reactor equipped with a magnetic stirrer, which had been purged thoroughly with nitrogen, 500 ml of toluene, 2.0 mmol of nickel acetylacetonate, and 10.0 mmol of bis(trimethylsilyl)amino-bis(trimethylsilylimino)phosphorane were added. Then 16.0 mmol of triethylaluminium was added thereto, and the internal temperature was controlled to be at 20°C. Subsequently, ethylene was introduced therein, and was polymerized for 3.0 hours by keeping the internal pressure at 25 kg/cm²G. After the completion of the reaction, the unreacted ethylene was removed, and the catalyst was decomposed by hydrochloric acid-methanol solution. The reaction mixture was poured into methanol to recover the resulting polymer, which was dried under reduced pressure for 8 hours, yielding 100 g of polymer.

The melting point was 92.0°C as measured by differential scanning calorimetry (DSC). The limiting viscosity was 1.98 dl/g at 140°C in o-dichlorobenzene. The number of methyl branches was 19 per 1000 carbon atoms, and that of hexyl and higher branches was 17 per 1000 carbon atoms according to ¹³C-NMR spectrum. The g-value was 0.66, and the number of terminal double bonds was not more than 0.2 in 1000 carbon atoms.

### EXAMPLE 5

Into a 2-litre stainless steel reactor equipped with a magnetic stirrer, which had been purged thoroughly with nitrogen, 500 ml of toluene, 2.0 mmol of nickel acetylacetonate, and 10.0 mmol of bis(trimethylsilyl)amino-bis(trimethylsilylimino)phosphorane were added. Then 16.0 mmols of diethylaluminium ethoxide was added thereto, and the internal temperature was controlled to be at 30°C. Subsequently, ethylene was introduced therein, and was polymerized for 3.0 hours by keeping the internal pressure at 25 kg/cm²G. After the completion of the reaction, the unreacted ethylene was removed, and the catalyst was decomposed by hydrochloric acid-methanol solution. The reaction mixture was poured into methanol to recover the resulting polymer, which was dried under reduced pressure for 8 hours, yielding 24 g of polymer.

The melting point was 73.0°C as measured by differential scanning calorimetry (DSC). The limiting viscosity was 1.12 dl/g at 140°C in o-dichlorobenzene. The number of methyl branches was 30 per 1000 carbon atoms, and that of hexyl and higher branches was 18 per 1000 carbon atoms according to ¹³C-NMR spectrum. The g-value was 0.75, and the number of terminal double bonds was not more than 0.2 in 1000 carbon atoms.

### EXAMPLE 6

Into a 2-litre stainless steel reactor equipped with a magnetic stirrer, which had been purged thoroughly with nitrogen, 500 ml of toluene, 2.0 mmol of bis-(1,1,1,5,5,5-hexafluoro-2,4-pentanediono)-nickel(II), and 10.0 mmol of bis(trimethylsilyl)amino-bis(trimethylsilylimino)phosphorane were added. Then 16.0 mmol of triisobutylaluminium was added thereto, and the internal temperature was controlled to be at 20°C. Subsequently, ethylene was introduced therein, and was polymerized for 3.0 hours by keeping the internal pressure at 25 kg/cm²G. After the completion of the reaction, the unreacted ethylene was removed, and the catalyst was decomposed by hydrochloric acid-methanol solution. The reaction mixture was poured into methanol to recover the resulting polymer, which was dried under reduced pressure for 8 hours, yielding 4 g of polymer.

The melting point was 101°C as measured by differential scanning calorimetry (DSC). The limiting viscosity was 0.96 dl/g at 140°C in o-dichlorobenzene. The number of methyl branches was 12 per 1000 carbon atoms, and that of hexyl and higher branches was 14 per 1000 carbon atoms according to ¹³C-NMR spectrum. The number of terminal double bonds was not more than 0.2 in 1000 carbon atoms.

### EXAMPLE 7

Into a 2-litre stainless steel reactor equipped with a magnetic stirrer, which had been purged thoroughly with nitrogen, 500 ml of toluene, 2.0 mmol of bis-(1,3-diphenyl-1,3-propanediono)-nickel(II), and 10.0 mmol of bis(trimethylsilyl)amino-bis(trimethylsilylimino)phosphorane were added. Then 16.0 mmol of triisobutylaluminium was added thereto, and the internal temperature was controlled to be at 20°C. Subsequently, ethylene was introduced therein, and was polymerized for 3.0 hours by keeping the internal pressure at 25 kg/cm²G. After the completion of the reaction, the unreacted ethylene was removed, and the catalyst was decomposed by hydrochloric acid-methanol solution. The reaction mixture was poured into methanol to recover the resulting polymer, which was dried under reduced pressure for 8 hours, yielding 21 g of polymer.

The melting point was 93°C as measured by differential scanning calorimetry (DSC). The limiting viscosity was 2.88 dl/g at 140°C in o-dichlorobenzene. The number of methyl branches was 17 per 1000 carbon atoms, and that of hexyl and higher branches was 6 per 1000 carbon atoms according to ¹³C-NMR spectrum. The g-value was 0.68, and the number of terminal double bonds was not more than 0.2 in 1000 carbon atoms.

### EXAMPLE 8

Into a 2-litre stainless steel reactor equipped with a magnetic stirrer, which had been purged thoroughly with nitrogen, 500 ml of toluene, 2.0 mmol of bis-(2,6-dimethyl-3,5-heptanediono)-nickel(II), and 10.0 mmol of bis (trimethylsilyl)amino-bis(trimethylsilylimino)phosphorane were added. Then 16.0 mmol of triisobutylaluminium was added thereto, and the internal temperature was controlled to be at 20°C. Subsequently, ethylene was introduced therein, and was polymerized for 3.0 hours by keeping the internal pressure at 25 kg/cm²G. After the completion of the reaction, the unreacted ethylene was removed, and the catalyst was decomposed by hydrochloric acid-methanol solution. The reaction mixture was poured into methanol to recover the resulting polymer, which was dried under reduced pressure for 8 hours, yielding 140 g of polymer.

The melting point was 91°C as measured by differential scanning calorimetry (DSC). The limiting viscosity was 1.32 dl/g at 140°C in o-dichlorobenzene. The number of methyl branches was 22 per 1000 carbon atoms, and that of hexyl and higher branches was 17 per 1000 carbon atoms according to ¹³C-NMR spectrum. The g-value was 0.71, and the number of terminal double bonds was not more than 0.2 in 1000 carbon atoms.

### EXAMPLE 9

Into a 2-litre stainless steel reactor equipped with a magnetic stirrer, which had been purged thoroughly with nitrogen, 500 ml of toluene, 2.0 mmol of bis-(4-phenyl-2,4-butanediono)-nickel(II), and 10.0 mmol of bis(trimethylsilyl)amino-bis(trimethylsilylimino)phosphorane were added. Then 16.0 mmol of triisobutylaluminium was added thereto, and the internal temperature was controlled to be at 20°C. Subsequently, ethylene was introduced therein, and was polymerized for 3.0 hours by keeping the internal pressure at 25 kg/cm²G. After the completion of the reaction, the unreacted ethylene was removed, and the catalyst was decomposed by hydrochloric acid-methanol solution. The reaction mixture was poured into methanol to recover the resulting polymer, which was dried under reduced pressure for 8 hours, yielding 84 g of polymer.

The melting point was 88°C as measured by differential scanning calorimetry (DSC). The limiting viscosity was 2.15 dl/g at 140°C in o-dichlorobenzene. The number of methyl branches was 22 per 1000 carbon atoms, and that of hexyl and higher branches was 15 per 1000 carbon atoms according to ¹³C-NMR spectrum. The g-value was 0.68, and the number of terminal double bonds was not more than 0.2 in 1000 carbon atoms.

### EXAMPLE 10

Into a 2-litre stainless steel reactor equipped with a magnetic stirrer, which had been purged thoroughly with nitrogen, 500 ml of toluene, 2.0 mmol of bis-(3-oxobutanalato)-nickel(II), and 10.0 mmol of bis(trimethylsilyl)amino-bis(trimethylsilylimino)phosphorane were added. Then 16.0 mmol of triisobutylaluminium was added thereto, and the internal temperature was controlled to be at 20°C. Subsequently, ethylene was introduced therein, and was polymerized for 3.0 hours by keeping the internal pressure at 25 kg/cm²G. After the completion of the reaction, the unreacted ethylene was removed, and the catalyst was decomposed by hydrochloric acid-methanol solution. The reaction mixture was poured into methanol to recover the resulting polymer, which was dried under reduced pressure for 8 hours, yielding 2.0 g of polymer.

Two melting points of 90°C and 77°C were observed by differential scanning calorimetry (DSC). The limiting viscosity was 0.74 dl/g at 140°C in o-dichlorobenzene. The number of methyl branches was 18 per 1000 carbon atoms, and that of hexyl and higher branches was 22 per 1000 carbon atoms according to ¹³C-NMR spectrum. The number of terminal double bonds was not more than 0.2 in 1000 carbon atoms.

### EXAMPLE 11

Into a 2-litre stainless steel reactor equipped with a magnetic stirrer, which had been purged thoroughly with nitrogen, 500 ml of toluene, 2.0 mmol of bis-(2-methyl-3-oxobutanalato)-nickel(II), 10.0 mmol of bis(trimethylsilyl)amino-bis(trimethylsilylimino)-phosphorane were added. Then 16.0 mmol of triisobutylaluminium was added thereto, and the internal temperature was controlled to be at 20°C. Subsequently, ethylene was introduced therein, and was polymerized for 3.0 hours by keeping the internal pressure at 25 kg/cm²G. After the completion of the reaction, the unreacted ethylene was removed, and the catalyst was decomposed by hydrochloric acid-methanol solution. The reaction mixture was poured into methanol to recover the resulting polymer, which was dried under reduced pressure for 8 hours, yielding 56 g of polymer.

The melting point was 91°C as measured by differential scanning calorimetry (DSC). The limiting viscosity was 0.91 dl/g at 140°C in o-dichlorobenzene. The number of methyl branches was 19 per 1000 carbon atoms, and that of hexyl and higher branches was 23 per 1000 carbon atoms according to ¹³C-NMR spectrum. The g-value was 0.64, and the number of the terminal double bond was not more than 0.2 in 1000 carbon atoms.

As described above, the present invention provides novel polyethylene which is useful for inflation films, injection-moulded articles, blow-moulded articles, extrusion-coating materials, and polymer blend materials.

## Claims

1. Polyethylene having from 1 to 60 methyl branches and from 1 to 60 hexyl or higher branches per 1000 carbon atoms and a g-value of from 0.5 to 0.9 wherein g = [η]/[η]_{ℓ}, where [η] is the limiting viscosity of a branched polyethylene, and [η]_{ℓ} is the limiting viscosity of a linear polyethylene having the same melt index, a limiting viscosity [η] of from 0.005 to 20.0 dl/g as measured at 140°C in o-dichlorobenzene, and not more than 0.2 terminal double bonds per 1000 carbon atoms as measured by infrared absorption spectrum.

2. A process for producing polyethylene, comprising polymerising ethylene in the presence of a catalyst comprising a co-ordination nickel compound of bivalent nickel, and an amino-bis (imino)-phosphorane represented by the general formula (I) below: 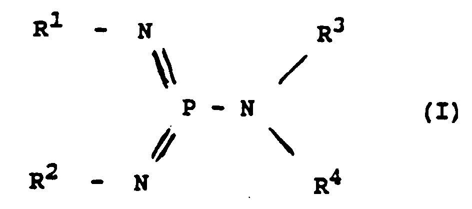 where R¹, R², R³ and R⁴ may be the same or different, and each represent an n-alkyl, isoalkyl, aryl or trialkysilyl group, characterised in that the co-ordination nickel compound is a nickel compound having β-diketone as ligands, represented by the general formula (II) below: 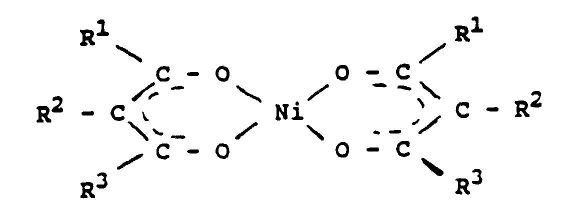 wherein R¹, R² and R³ are the same or different and represent a hydrogen atom , an n-alkyl group (having 1 to 4 carbon atoms), an isoalkyl group (having 3 to 5 carbon atoms), a tert-alkyl group (having 4 to 6 carbon atoms), an n-fluoroalkyl group (having 1 to 4 carbon atoms) or a phenyl group, or is nickel stearate or is nickel acetate and in that the catalyst also comprises an organoaluminium compound.

3. A process as claimed in claim 2 characterised in that the organoaluminium compound is of the general formula AlRₛX₃₋ₛ, wherein s is an integer of 2 or 3; R represents an alkyl group of 1 to 12 carbons; and X represents a halogen atom or an alkoxy group.

## Patentansprüche

1. Polyethylen mit 1 bis 60 Methylzweigen sowie 1 bis 60 Hexyl- oder höheren Zweigen je 1.000 Kohlenstoffatomen und einem g-Wert von 0,5 bis 0,9, wobei g = [η]/[η]_{ℓ}, wobei [η] die Grenzviskosität eines verzweigten Polyethylens und [η]_{ℓ} die Grenzviskosität eines linearen Polyethylens mit dem gleichen Schmelzindex bedeutet, einer Grenzviskosität [η] von 0,005 bis 20,0 dl/g, gemessen bei 140°C in o-Dichlorbenzol sowie nicht mehr als 0,2 endständige Doppelbindungen je 1.000 Kohlenstoffatomen, gemessen durch Infrarotabsorptionsspektroskopie.

2. Verfahren zur Herstellung von Polyethylen, umfassend Polymerisieren von Ethylen in Gegenwart eines Katalysators, umfassend eine Nickel-Koordinationsverbindung von zweiwertigem Nickel und ein Amino-bis(imino)phosphoran der nachstehenden, allgemeinen Formel (I): 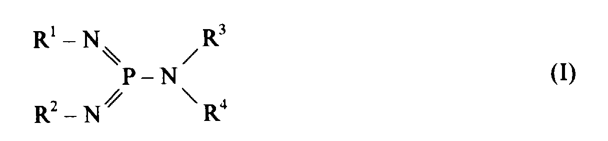 wobei R¹, R², R³ und R⁴ gleich oder verschieden sein können und jeweils einen n-Alkyl-, Isoalkyl-, Aryl- oder Trialkylsilylrest bedeuten,
dadurch gekennzeichnet, daß die Nickel-Koordinationsverbindung eine Nickelverbindung mit β-Diketon als Liganden der nachstehenden, allgemeinen Formel (II): 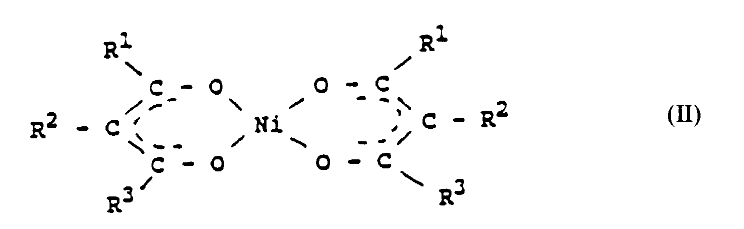 wobei R¹, R² und R³ gleich oder verschieden sind und ein Wasserstoffatom, einen n-Alkylrest (mit 1 bis 4 Kohlenstoffatomen), einen Isoalkylrest (mit 3 bis 5 Kohlenstoffatomen), einen tert-Alkylrest (mit 4 bis 6 Kohlenstoffatomen), einen n-Fluoralkylrest (mit 1 bis 4 Kohlenstoffatomen) oder eine Phenylgruppe darstellen,
oder Nickelstearat oder Nickelacetat bedeutet, und dadurch, daß der Katalysator auch eine Organoaluminium verbindung umfaßt.

3. Verfahren nach Anspruch 2, dadurch gekennzeichnet, daß die Organoaluminiumverbindung die allgemeine Formel AlR_{S}X_{3-S} besitzt, wobei s eine ganze Zahl ist und 2 oder 3 beträgt, R ein Alkylrest mit 1 bis 12 Kohlenstoffatomen darstellt, und X für ein Halogenatom oder einen Alkoxyrest steht.

## Revendications

1. Polyéthylène ayant de 1 à 60 ramifications méthyliques et de 1 à 60 ramifications hexyliques ou supérieures pour 1000 atomes de carbone et une valeur g de 0,5 à 0,9 dans lequel g = [η]/[η]_{c}, où [r] est la viscosité limite d'un polyéthylène ramifié et [η]ₑ est la viscosité limite d'un polyéthylène linéaire ayant le même indice de fusion, une viscosité [η] limite de 0,005 à 20 dl/g mesurée à 140°C dans du o-dichlorobenzène et pas plus de 0,2 double liaison terminale pour 1000 atomes de carbone mesurés sur un spectre d'absorption infrarouge.

2. Procédé pour la production de polyéthylène, comprenant une étape consistant à polymériser de l'éthylène en présence d'un catalyseur comprenant un composé de nickel coordiné de nickel bivalent et un aminobis (imino)phosphorane représenté par la formule générale (I) ci-après : 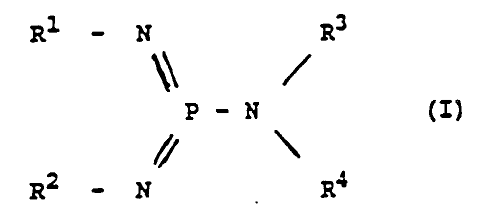 où R¹, R², R³ et R⁴ peuvent être identiques ou différents et chacun représente un groupe n-alkyle, isoalkyle, aryle ou trialkysilyle, caractérisé en ce que le composé de nickel coordiné est un composé de nickel ayant une β-dicétone comme ligands représenté par la formule générale (II) ci-après : 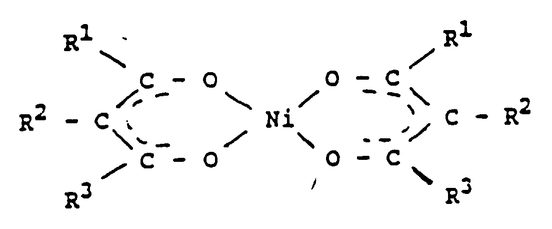 dans laquelle R¹, R² et R³ sont identiques ou différents et représentent un atome d'hydrogène, un groupe n-alkyle (comportant 1 à 4 atomes de carbone), un groupe isoalkyle (comportant 3 à 5 atomes de carbone), un groupe tert-alkyle (comportant 4 à 6 atomes de carbone), un groupe n-fluoroalkyle (comportant 1 à 4 atomes de carbone) ou un groupe phényle, ou est un stéarate de nickel ou est un acétate de nickel et en ce que le catalyseur comprend également un organoaluminium.

3. Procédé selon la revendication 2, caractérisé en ce que l'organoaluminium est de la formule générale AlRₛX₃₋ₛ, dans laquelle s est un nombre entier de 2 ou 3 ; R représente un groupe alkyle de 1 à 12 carbones ; et X représente un halogène ou un groupe alcoxy.
